# EUROPEAN PATENT APPLICATION

(11) **EP 1 607 885 A2**
(43) Date of publication of application: **21.12.2005**
(21) Application number: 05076090.9
(22) Date of filing: 11.05.2005
(51) Int. Cl.: G06F 17/30

(54) **Method for indexing and retrieving documents**

(30) Priority: 17.06.2004 BE 200400297
(71) Applicant: Vartec, Naamloze vennootschap, 9000 Gent (BE)
(72) Inventor: Vandamme, Mike, B-9032 Wondelgem (BE)
(74) Representative: Donné, Eddy

(57) **Abstract**

Method for indexing and retrieving documents, characterized in that, in order to index a document (1), it comprises a combination of the following operational steps: identifying core concepts in the document (1) by means of one or several domain-specific thesauri; identifying relationships between core concepts in the document (1) by means of one or several relationship registers (4); and indexing the document (1) on the basis of the identified core concepts and relationships.

## Description

The present invention concerns a method for indexing and retrieving documents, more particularly for indexing and retrieving documents in a digital manner, whereby by documents is meant all the data contained in text documents, sound fragments, image paste-ups or the like.

It is known to index text documents on the basis of their content by means of one or several so-called thesauri.

The text documents to be indexed are hereby textually analyzed by means of a software program which looks for what are called core concepts from one or several thesauri in the text document.

On the basis of the frequency and location at which the different found core concepts occur in the text document, this text document receives a certain index, in which the different core concepts are included.

In order to retrieve an indexed document, a user may use a known electronic search function, whereby he/she introduces a core concept, after which all documents containing this core concept are given as a result, either or not ordered on the basis of the frequency at which the core concept concerned occurs in the document.

A disadvantage of such a known method for indexing and retrieving documents based on a thesaurus is that this method does not allow to retrieve documents which are related to the introduced core concept in one way or another, but in which the core concept itself, or a synonym thereof which is included in the thesaurus, does not occur, so that documents with relevant information are possibly being withheld from the user.

Another known method for indexing and retrieving documents is by describing a domain based on ontologies, whereby a user can index documents on the basis of relationships between core concepts, whereby in the case of a search, all documents to which the above-mentioned relationship applies are selected.

A disadvantage of such a known method is that the indexing of the documents to be indexed is relatively laborious, and that the retrieval of documents may take relatively long, as the number of relationships between different core concepts quickly becomes very large with an increasing number of core concepts.

The present invention aims to remedy the above-mentioned and other disadvantages.

To this end, the present invention concerns a method for indexing and retrieving documents, which method comprises a combination of the following operational steps: the identification of core concepts in the document by means of one or several domain-specific thesauri; the identification of relationships between core concepts by means of one or several relationship registers; and indexing the document on the basis of the identified core concepts and relationships.

An advantage of such a method according to the invention is that a document can be retrieved by a user in a fast and simple manner, as the number of relationships between the core concepts is restricted to the relationships between core concepts within a domain-specific thesaurus, which number of relationships can be selected as a function of the extent of the applied thesauri and the relationship registers, and as a consequence may be relatively small.

The present invention also concerns a computer program which makes it possible to apply the above-described method.

The present invention also concerns a data carrier which is provided with the above-mentioned computer program.

In order to better explain the characteristics of the present invention, the following method according to the invention for indexing and retrieving documents is described as an example only without being limitative in any way, with reference to the accompanying figures, in which:
figure 1 schematically represents a method according to the invention for indexing documents;
figure 2 represents a variant of figure 1;
figure 3 schematically represents a method according to the invention for retrieving indexed documents;
figure 4 represents a practical example of a representation of a result when retrieving indexed documents.

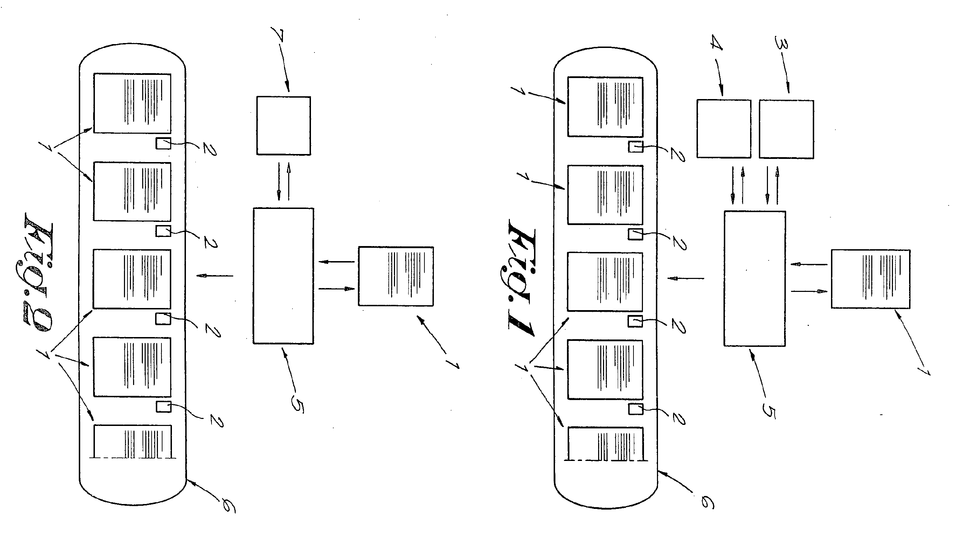

Figure 1 schematically represents a survey of the different operational steps which are implemented in order to index a document 1, on the basis of which index 2 this document 1 can be retrieved and applied.

According to the present invention, every document 1 to be indexed is analyzed for the presence of core concepts, which core concepts are stored in one or several thesauri 3, and every document 1 is also analyzed for the presence of possible relationships between the different core concepts contained in the document 1, which relationships are stored in what are called relationship registers 4.

Such analyses can be done manually by persons or automatically by specific computer programs.

In this way is created a collection of indexed documents 1, which together form a source of information or a knowledge cloud 6.

The document 1 may hereby be a text document or a figure or a collection of figures of an audiovisual document in the form of a sound fragment, a video paste-up or the like.

The thesauri 3 are hereby preferably structured in a hierarchical manner, whereby one or several thesauri, for a certain field of study, contain a number of base terms which each form a collective term for a number of sub terms placed in several sub thesauri, such that a number of domain-specific thesauri 3 are created.

This hierarchic structure of the onto-thesaurus 7 is advantageous in that different base terms are so to say hierarchically structured and thus are linked to each other with a certain degree of implicitness. An example thereof is that for example the term 'chloroplast' is linked to 'mesophyll' on a first, specific level; on a following, more general level to 'leaf'; on a yet more general level to 'plant'; and on a final level to the very general term 'flora'.

The relationship registers 4 consist of a collection of relationships which are each specified further in sub registers. The above-mentioned registers 4 may hereby contain relationships of linguistic or symbolic nature, whereby the linguistic relationships comprise for example fixed sentence structures which are used, for example, to describe a cause and effect, such that when indexing, the core concepts of cause and effect can be linked to each other in an appropriate manner.

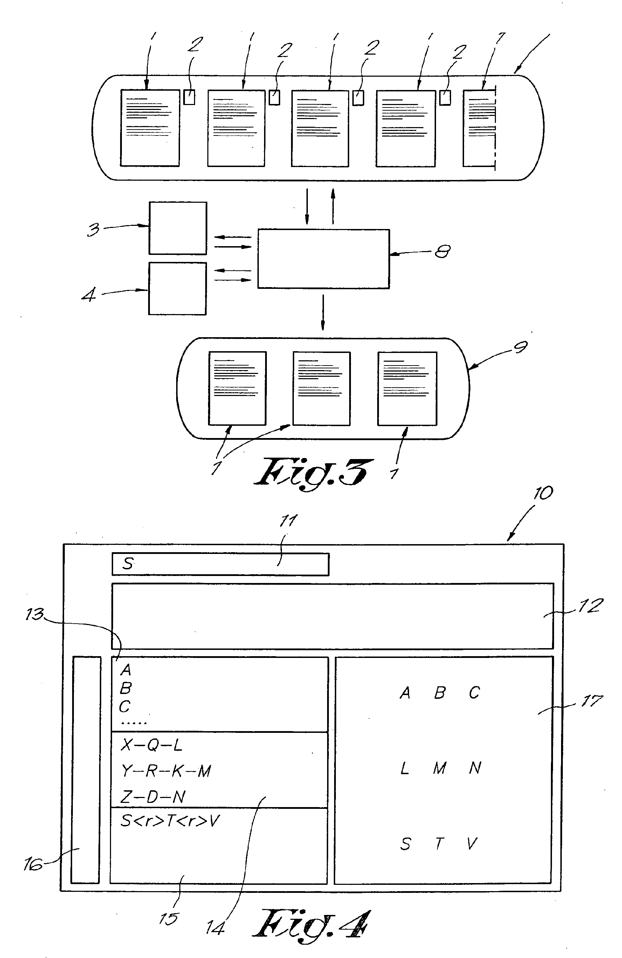

As is schematically represented in figure 2, the thesauri 3 and relationship registers 4 can be integrated, selectively and optionally, so as to form what is called an onto-thesaurus 7 together, in which the prefix 'onto' stands for ontological.

Such an onto-thesaurus 7 is formed of one or several general thesauri 3 of base terms, either or not derived from an existing ontology, whereby relationships are linked to one or several of these base terms, for example as a function of certain objectives, tasks or the like.

Every specific combination of a base term and a relationship concerned then gives cause to what is called a sub ontology, in which terms are contained which relate to the above-mentioned base term according to the above-mentioned relationship.

Naturally, the terms of this sub ontology can be further specified, either or not in connection with relationships, in domain-specific underlying sub ontologies.

By means of the results of the above-mentioned analysis, an index 2 is attributed to every document which is statistically determined on the basis of, for example, the frequency of the core concepts occurring in the document 1, the place where they occur in the document 1, their known relationship to other core concepts, the structure and the degree of development of the used thesauri and the like.

In this index 2 may also be included core concepts which do not explicitly occur in the document 1, but which are included in the thesauri 3 as a synonym of an explicitly occurring core concept, which are indicated in the thesauri 3 as a more general or more specific term for an explicitly occurring core concept and/or which are related to one or several of these explicitly occurring core concepts according to a relationship found in the document 1.

Thus, for example, the term 'metal' will be included as core concept in the index 2 of a document 1, if 'iron' occurs in that document 1, provided the terms iron and metal are related in one or several of the thesauri 3 concerned.

Also the relationship between the different core concepts is preferably summarized in the index 2 by means of the above-mentioned registers of relationships 4.

The use of the registers of relationships 4 or onto-thesauri 7 which, as mentioned, are a combination of thesauri 3 and registers of relationships 4, also makes it possible to place the found core concepts in a certain context. Thus, for example, homonyms can be distinguished.

Indeed, two or several thesauri 3 which each refer to a specific domain may both recognize a same core concept if they both contain a core concept which is written or pronounced in an identical manner, after which the registers of relationships 4 can place the core concept, by means of for example other core concepts in the document, in a right context and thus link the core concept concerned to the thesaurus 3 of the domain which corresponds to the content of the document 1.

An example thereof is the word "tree" which may refer to a plant as well as to a data structure in the field of information technology.

In order to process such homonyms in a suitable manner in the index 2 of the documents, they are regarded as implicit terms when indexing, although they explicitly occur in the document.

By regarding them as implicit terms, they will always be linked to the right explicit core concepts from the document 1 by means of the registers of relationships 4 or onto-thesauri 7.

As is represented in figure 3, the above-mentioned source of information or knowledge cloud 6 can be consulted by means of a search program 8 which is linked to the above-mentioned thesauri 3 and relationship registers 4.

The use of this search program 8, which is preferably a computer program, can be relatively simple, whereby a user selects one or several search terms directly in one user selects one or several search terms directly in one or several of the domain-specific thesauri 3, and/or indicates one or several relationships in the relationship register 4, after which the search program 8 looks in the indexes 2 of the different documents 1 in the knowledge cloud 6 and represents those documents 1 as a result 9 which contain the selected search terms and/or indicated relationships in their index 2.

Naturally, the user can further use this result 9 as a knowledge cloud to make a new search.

The result 9 of the above-mentioned search is preferably represented in two different phases.

In the first phase, a survey is given of the different found documents 1 which are related to one or several search terms, whereby these documents 1 are ordered according to their relevance, which can be statistically determined on the basis of the correspondence between the search terms and the index 2 of the documents 1 concerned.

Apart from the relevance of the found documents 1, also the type of document, for example a text document, a video fragment, an audio recording or the like can be mentioned, as well as a short survey of the content of the document 1 and a survey of the major core concepts occurring in the document 1.

When summing up the major core concepts, a color code is preferably used which enables the user to quickly and efficiently make a choice between the found documents 1 and to visualize the above-mentioned level of implicitness of the core concepts of the document 1, or more particularly in the index 2 of the document 1.

In the second phase of representing the found documents 1, individual documents 1 are visualized, which have been selected by the user from the list of found documents 1, whereby each individual representation of a document 1 can be accompanied with a survey of the index terms occurring in the document 1 concerned, as well as the relationships between these different index terms, whereby the user is offered the possibility to do further searches on the basis of the represented index terms and relationships.

Figure 4 represents a practical example of the result 9 on a computer screen 10, whereby this screen 10 is subdivided in different windows 11 to 17.

According to this example, the search term for which a query has to be carried out is introduced in the window 11 at the top of the screen 10, after which the different documents 1 coming as a result 9 out of this query in the above-mentioned first phase, are summed up in the window 12, either or not sorted according to their relevance.

In the second phase, when the user has selected one of the found documents 1, the core concepts which are explicitly present in that document 1, the core concepts which are implicitly present in that document 1, and the relationships between de different implicit and explicit core concepts are represented in the windows 13 to 15 respectively.

Next to the windows 13 to 15 is provided a window 16 in which the above-mentioned color codes for every core concept are indicated, and in the window 17, the entire document 1 is finally shown.

When using the onto-thesaurus 7, the user has the advantage that he or she can combine one or several search terms in a query with one or several relationships, whereby the search program 8 will only look for the selected relationships between the terms of the domain-specific thesauri 3 to which the selected search terms belong, and whereby this number of relationships is relatively small, such that the search program 8 requires less time to come to the result 9.

It should be noted that the above-mentioned knowledge cloud 6 can also be used to draw up documents, whereby a user can find relationships between different terms in the above-mentioned relationship registers 4 in a simple manner and whereby the user is sure to select the proper terms with the help of the above-mentioned thesauri 3.

The present invention is by no means limited to the method given as an example; on the contrary, such a method for indexing and retrieving documents can be realized according to different variants while still remaining within the scope of the invention.

## Claims

1. Method for indexing and retrieving documents, **characterized in that**, in order to index a document (1), it comprises a combination of the following operational steps: identifying core concepts in the document (1) by means of one or several domain-specific thesauri; identifying relationships between core concepts in the document (1) by means of one or several relationship registers (4); and indexing the document (1) on the basis of the identified core concepts and relationships.

2. Method according to claim 1, **characterized in that** the above-mentioned thesauri (3) are hierarchically structured.

3. Method according to claim 1, **characterized in that** the above-mentioned relationship registers (4) comprise linguistic relationships.

4. Method according to claim 1, **characterized in that** the above-mentioned relationship registers (4) are hierarchically structured.

5. Method according to claim 1, **characterized in that** the above-mentioned thesauri (3) and relationship registers (4) are integrated so as to form what is called an onto-thesaurus (7).

6. Method according to claim 1, **characterized in that**, for retrieving indexed documents, it comprises the following operational steps:
the introduction by the user of one or several search terms from one or several of the above-mentioned thesauri (3); the selection of documents (1) whose index comprises one or several of these search terms; the introduction by the user of one or several relationships from the relationship registers (4); the selection of documents (1) whose index (2) comprises the above-mentioned relationship from the above-mentioned, already selected documents (1); and showing the last selected documents (1) as a result.

7. Method according to claim 1, **characterized in that**, for retrieving indexed documents, it comprises the following operational steps:
the introduction by the user of one or several relationships from one or several of the above-mentioned relationship registers (4); the selection of documents (1) whose index comprises one or several of these relationships; the introduction by the user of one or several search terms from the thesauri (3); the selection of documents (1) whose index (2) comprises the above-mentioned search terms from the above-mentioned, already selected documents (1); and showing the last selected documents (1) as a result.

8. Method according to claim 5, **characterized in that**, in order to retrieve indexed documents, it consists of introducing one or several search terms in the above-mentioned onto-thesaurus (7); selecting the documents (1) whose index (2) contains the above-mentioned search term, search terms respectively; and showing these selected documents (1) .

9. Method according to any of claims 6, 7 or 8,
**characterized in that** the found documents (1) are shown in two phases, whereby, in a first phase, a survey is given of the different found documents (1), ordered according to their relevance, and whereby, in a second phase, after a selection, individual documents (1) can be represented.

10. Method according to claim 9, **characterized in that** in the above-mentioned first phase and/or second phase of showing the documents (1) found, a color code is used which indicates what core concepts occur in the different documents (1) and which makes it possible to visualize a degree of implicitness of the core concepts in the index (2) of the documents (1).

11. Method according to claim 1, **characterized in that**, for indexing and retrieving the documents (1), use is made of a computer program (5, 8).

12. Computer program for indexing and retrieving documents, **characterized in that** it allows to apply the above-mentioned method according to one or several of claims 1 to 11.

13. Data carrier, **characterized in that** it is provided with a computer program (5, 8) according to claim 12.
